# EUROPEAN PATENT APPLICATION

(11) **EP 4 633 034 A1**
(43) Date of publication of application: **15.10.2025**
(21) Application number: 23899296.0
(22) Date of filing: 27.04.2023
(51) Int. Cl.: H02S 40/36

(54) **SHUTDOWN APPARATUS FOR PHOTOVOLTAIC MODULE, AND PHOTOVOLTAIC SYSTEM**

(30) Priority: 08.12.2022 CN 202211573001
(71) Applicant: Sungrow Power Supply Co., Ltd., Hefei, Anhui 230088 (CN)
(72) Inventor: YU, Yanfei, Hefei, Anhui 230088 (CN); YANG, Zongjun, Hefei, Anhui 230088 (CN); YANG, Yu, Hefei, Anhui 230088 (CN)
(74) Representative: Zacco Norway AS
(86) International application number: PCT/CN2023/091148
(87) International publication number: WO 2024/119702

(57) **Abstract**

The present application discloses a shutdown apparatus for a photovoltaic module, and a photovoltaic system. The shutdown apparatus comprises: a first part and a second part; the first part or the second part comprises a shutdown circuit; and the first part and the second part are connected via a cable; the first part comprises a negative input terminal and a negative output terminal, and the second part comprises a positive input terminal and a positive output terminal; the negative input terminal and the positive input terminal are respectively used for connecting to a negative electrode and a positive electrode of a corresponding photovoltaic module; and the positive output terminal and the negative output terminal are respectively used for being connected in series to different shutdown apparatuses. Because the two parts are independent, the distance between the two parts can be set according to requirements, the two parts can be set at positions convenient for connecting to a photovoltaic module, and the two parts are connected to an interface via a cable. The shutdown apparatus does not require additional extension wires. The invention reduces total cable length, decreases installation time, reduces the total losses of the cable, and improves the reliability of the photovoltaic system.

## Description

This application claims the priority to Chinese Patent Application No. 202211573001.6, titled "SHUTDOWN APPARATUS FOR PHOTOVOLTAIC MODULE, AND PHOTOVOLTAIC SYSTEM", filed on December 8, 2022 with the China National Intellectual Property Administration, which is incorporated herein by reference in its entirety.

### FIELD

The present disclosure relates to the technical field of photovoltaic power generation, and in particular to a shutdown apparatus for a photovoltaic module, and a photovoltaic system.

### BACKGROUND

In a photovoltaic power generation system, a direct-current power generated by a photovoltaic array is converted to an alternating-current power by using an inverter and then is transmitted to a power grid or a load. The photovoltaic array includes multiple photovoltaic modules connected in series or in parallel, and the voltage of the photovoltaic array may reach several hundred volts or even thousands of volts. Serious electric shock accidents may occur when maintenance personnel or other personnel approach a photovoltaic array.

Therefore, for safety purposes, the photovoltaic module is arranged with a shutdown apparatus. Each photovoltaic module is arranged with a shutdown apparatus. A host apparatus may be manually triggered to issue a shutdown instruction for disconnecting all shutdown apparatuses, so that an output voltage of the entire photovoltaic array is controlled to be within a safe voltage range in a predetermined time period.

In the relational technology, most photovoltaic modules are configured with split junction boxes. In a case that no shutdown apparatus is arranged in the photovoltaic system, the positive output cable and the negative output cable are connected to each other, and short cables may be used, which have low cable costs and low cable losses. In a case that a relational shutdown apparatus is arranged in the photovoltaic system, additional extension cables and terminals are required for connecting an output terminal of the photovoltaic module to an input terminal of the shutdown apparatus. Therefore, in the case of adopting the relational shutdown apparatus in the photovoltaic system, the total length of cables are to be increased, and the cable costs and the low cable losses are increased.

### SUMMARY

In view of this, a shutdown apparatus for a photovoltaic module, and a photovoltaic system, are provided according to the present disclosure, to reduce cable length and overall losses.

A shutdown apparatus for a photovoltaic module is provided according to the present disclosure. The shutdown apparatus includes a first part and a second part. The first part or the second part includes a shutdown circuit. The first part and the second part are connected to each other via a cable. The first part includes a negative input terminal and a negative output terminal, and the second first includes a positive input terminal and a positive output terminal. The negative input terminal is configured to be connected to a negative electrode of the photovoltaic module and the positive input terminal is configured to be connected to a positive electrode of the photovoltaic module; or the negative input terminal is configured to be connected to the negative electrode of the photovoltaic module and the positive input terminal is configured to be connected to a positive electrode of another photovoltaic module; or the negative input terminal is configured to be connected to a negative electrode of another photovoltaic module and the positive input terminal is configured to be connected to the positive electrode of the photovoltaic module. The positive output terminal and the negative output terminal are configured to be connected in series with different shutdown apparatuses.

In an embodiment, the first part further includes a first bottom box. At least one of the negative input terminal and the negative output terminal is configured with a wire terminal, and the wire terminal is connected to the first bottom box via a cable; or at least one of the negative input terminal and the negative output terminal is configured with a board terminal, and the board terminal is fixedly connected to the first bottom box.

In an embodiment, the negative input terminal and the negative output terminal are arranged on different sides of the first bottom box.

In an embodiment, the first part includes a three-way terminal. The three-way terminal includes the negative input terminal, the negative output terminal, and a first cable terminal. The first cable terminal is connected to the second part.

In an embodiment, the second part further includes a second bottom box. At least one of the positive input terminal and the positive output terminal is configured with a wire terminal, and the wire terminal is connected to the second bottom box via a cable; or at least one of the positive input terminal and the positive output terminal is configured with a board terminal, and the board terminal is connected to the second bottom box via a cable.

In an embodiment, the positive input terminal and the positive output terminal are arranged on different sides of the second bottom box.

In an embodiment, the second part includes a three-way terminal. The three-way terminal includes the positive input terminal, the positive output terminal, and a second cable terminal. The second cable terminal is connected to the first part.

In an embodiment, the first bottom box is arranged with a first fastening structure, and the first fastening structure is configured to fasten the first bottom box to the photovoltaic module.

In an embodiment, the second bottom box is arranged with a second fastening structure, and the second fastening structure is configured to fasten the second bottom box to the photovoltaic module.

In an embodiment, the second part includes a shutdown circuit, and the shutdown circuit includes a shutdown device. The shutdown device includes a control circuit, a diode, and a switch. A first terminal of the switch is connected to the positive input terminal, and a second terminal of the switch is connected to the positive output terminal. An anode of the diode is connected to the negative output terminal via a cable, and a cathode of the diode is connected to the second terminal of the switch. The control circuit is configured to control the switch to be turned on or turned off.

In an embodiment, the first part includes a shutdown circuit, and the shutdown circuit includes a shutdown device. The shutdown device includes a control circuit, a diode, and a switch. A first terminal of the switch is connected to the negative input terminal, and a second terminal of the switch is connected to the negative output terminal. A cathode of the diode is connected to the positive output terminal via a cable, and an anode of the diode is connected to the second terminal of the switch. The control circuit is configured to control the switch to be turned on or turned off.

In an embodiment, the shutdown circuit includes an optimizer, and the optimizer includes a buck-boost circuit, a boost circuit, or a buck circuit.

In an embodiment, the second part includes the optimizer, and the optimizer includes a buck circuit. The buck circuit includes a control circuit, a diode, a switch, and an inductor. A first terminal of the switch is connected to the positive input terminal, and a second terminal of the switch is connected to the positive output terminal via the inductor. An anode of the diode is connected to the negative output terminal via a cable, and a cathode of the diode is connected to the positive output terminal via the inductor. The control circuit is configured to control the switch to be turned on or turned off.

In an embodiment, the optimizer includes the buck circuit. The buck circuit includes a control circuit, a diode, a switch, and an inductor. A first terminal of the switch is connected to the negative input terminal, and a second terminal of the switch is connected to the negative output terminal via the inductor. A cathode of the diode is connected to the positive output terminal via a cable, and an anode of the diode is connected to the negative output terminal via the inductor. The control circuit is configured to control the switch to be turned on or turned off.

According to the present disclosure, a photovoltaic system is further provided. The photovoltaic system includes multiple shutdown apparatuses described above and an inverter. For each of the multiple shutdown apparatuses, the first part and the second part of the shutdown apparatus are connected to each other via a cable; the positive output terminal of the shutdown apparatus is connected to a negative output terminal of a first adjacent shutdown apparatus, and the negative output terminal of the shutdown apparatus is connected to a positive output terminal of a second adjacent shutdown apparatus; the positive input terminal of the shutdown apparatus is configured to be connected to a positive electrode of a photovoltaic module and the negative input terminal of the shutdown apparatus is configured to be connected to a negative electrode of the photovoltaic module, or the positive input terminal of the shutdown apparatus is configured to be connected to a positive electrode of a photovoltaic module and the negative input terminal of the shutdown apparatus is configured to be connected to a negative electrode of another photovoltaic module; and the multiple shutdown apparatuses are connected in series and then connected to an input terminal of the inverter.

In an embodiment, each of the multiple shutdown apparatuses is pre-arranged on a corresponding photovoltaic module.

It can be seen that the present disclosure has the following beneficial effects.

The shutdown apparatus according to the embodiments of the present disclosure includes two parts, each of the two parts includes an input terminal and an output terminal, the input terminals are connected to the photovoltaic module, and the output terminals are connected in series with output terminals of other shutdown apparatuses. As the two parts are independent, the distance between the two parts may be determined according to requirements. The two parts are arranged at positions convenient for connecting to the photovoltaic module, and the two parts are connected with each other via a cable. In this way, the problem of connecting an output cable of a photovoltaic module with a 3-part junction box to a shutdown apparatus through an extension cable can be avoided, and it is unnecessary to arrange an addition extension cable for the shutdown apparatus. Therefore, the total cable length can be shortened, the installation time can be reduced, the total cable losses can be reduced, and the reliability of the photovoltaic system can be improved.

### BRIEF DESCRIPTION OF THE DRAWINGS

FIG. 1 is a schematic diagram of a photovoltaic system according to the present disclosure;
FIG. 2 is a schematic diagram of a relational shutdown apparatus;
FIG. 3 is a schematic diagram of a shutdown apparatus for a photovoltaic module according to an embodiment of the present disclosure;
FIG. 4 is a schematic diagram showing an application of a shutdown apparatus according to an embodiment of the present disclosure;
FIG. 5 is a schematic diagram of a first part of a shutdown apparatus according to an embodiment of the present disclosure;
FIG. 6 is a schematic diagram of a first part of a shutdown apparatus according to another embodiment of the present disclosure;
FIG. 7 is a schematic diagram of a first part of a shutdown apparatus according to another embodiment of the present disclosure;
FIG. 8 is a schematic diagram of a shutdown apparatus without a bottom box according to an embodiment of the present disclosure;
FIG. 9 is a schematic diagram of a shutdown apparatus without a bottom box according to another embodiment of the present disclosure;
FIG. 10 is a schematic diagram of a shutdown apparatus without a bottom box according to another embodiment of the present disclosure;
FIG. 11 is a schematic diagram of installing a shutdown apparatus on a photovoltaic module according to an embodiment of the present disclosure;
FIG. 12 is a schematic diagram of installing a shutdown apparatus on a photovoltaic module according to another embodiment of the present disclosure;
FIG. 13 is a schematic diagram of a shutdown apparatus according to an embodiment of the present disclosure;
FIG. 14 is a schematic diagram of a shutdown apparatus according to another embodiment of the present disclosure;
FIG. 15 is a schematic diagram of a shutdown apparatus according to another embodiment of the present disclosure;
FIG. 16 is a schematic diagram of a shutdown apparatus according to another embodiment of the present disclosure; and
FIG. 17 is a schematic diagram of a photovoltaic system according to an embodiment of the present disclosure.

### DETAILED DESCRIPTION

In order to enable those skilled in the art to better understand the shutdown apparatus according to the embodiments of the present disclosure, application scenarios of the shutdown apparatus are described in detail below in conjunction with the drawings.

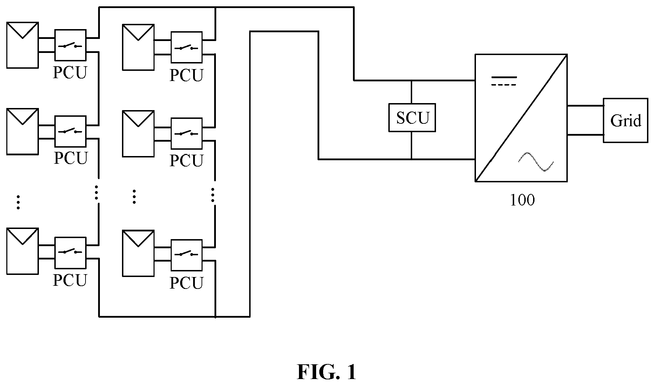

Reference is made to FIG. 1, which is a schematic diagram of a photovoltaic system according to the present disclosure.

An input terminal of an inverter 100 is connected to multiple photovoltaic strings. In FIG. 1, descriptions are provided by taking an example of connecting two photovoltaic strings, and one photovoltaic string may be connected.

Each of the two photovoltaic strings includes multiple photovoltaic modules. An output terminal of each of the photovoltaic modules is connected to an input terminal of a corresponding shutdown apparatus PCU. Output terminals of all the shutdown apparatuses PCU corresponding to the photovoltaic strings are connected in series and then connected to the input terminal of the inverter 100. Each of the shutdown apparatuses PCU includes four terminals: two input terminals and two output terminals. A host SCU may control an on/off state of each of the shutdown apparatuses PCU. In turning on a shutdown apparatus PCU, a corresponding PV energy is transmitted to the input terminal of the inverter 100, and in turning off the shutdown apparatus PCU, the corresponding PV energy cannot be transmitted to the input terminal of the inverter 100.

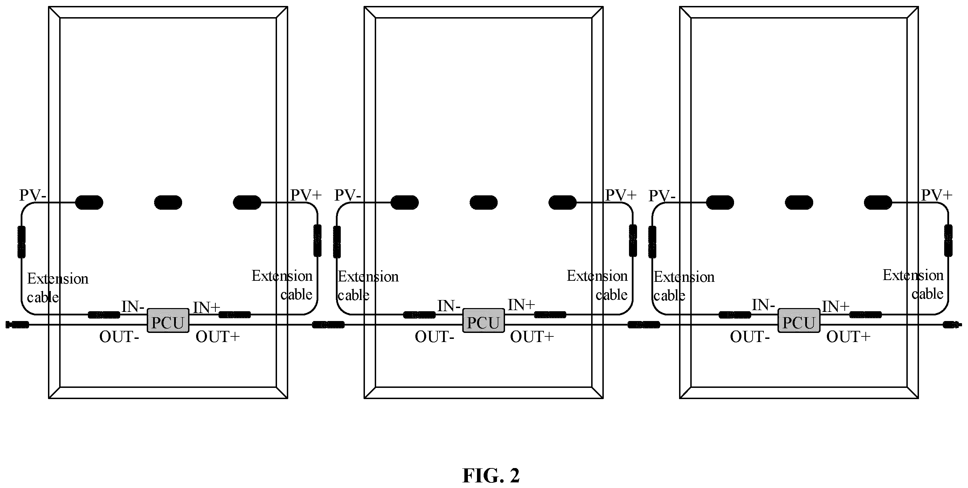

In connecting photovoltaic modules with 3-part junction boxes in series through shutdown apparatuses according to the relational technology, one shutdown apparatus corresponds to one photovoltaic module. As shown in FIG. 2, two input terminals IN+ and IN- of a shutdown apparatus are respectively connected to a positive electrode PV+ and a negative electrode PV- of a corresponding photovoltaic module, and two output terminals OUT+ and OUT- of the shutdown apparatus are respectively connected in series with adjacent shutdown apparatuses.

However, due to the short output cables of the photovoltaic modules, it is required to arrange additional extension cables and terminals for the shutdown apparatuses shown in FIG. 2 to connect to the output terminals of the photovoltaic modules and the input terminals of the PCUs, resulting in an increase in the total length of the cable and power consumption.

Therefore, to solve the above technical problem, a shutdown apparatus for a photovoltaic module is provided according to the embodiments of the present disclosure, reducing the total length of the cable and the overall power consumption.

In order to make the above objectives, features, and advantages of the present disclosure more apparent and easier to understand, embodiments of the present disclosure are described in detail below in conjunction with the drawings and the embodiments.

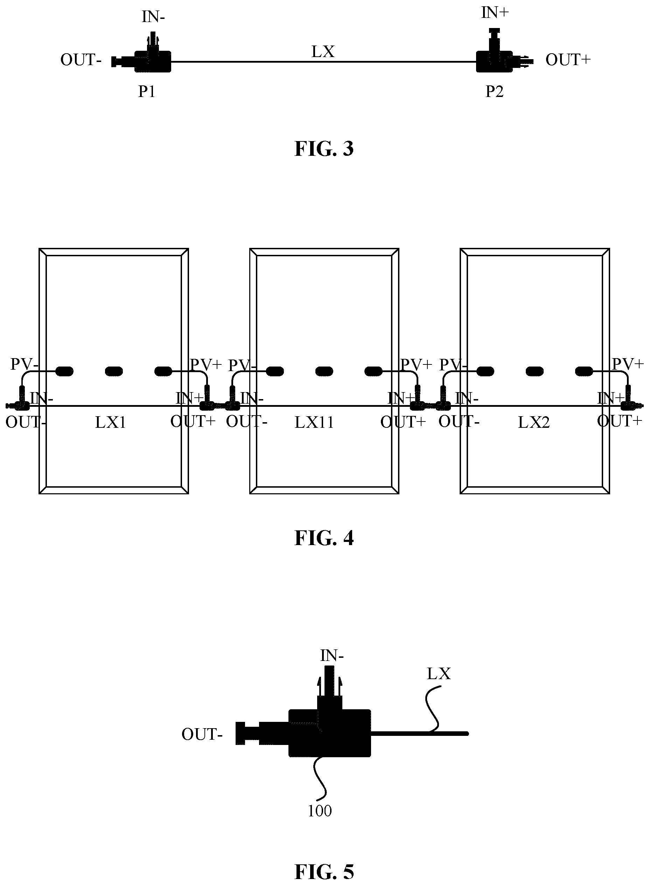

Reference is made to FIG. 3, which is a schematic diagram of a shutdown apparatus for a photovoltaic module according to an embodiment of the present disclosure.

The shutdown apparatus for the photovoltaic module according to the embodiment includes: a first part P1 and a second part P2. The first part P1 and the second part P2 may be connected to each other via a cable LX.

The first part P1 or the second part P2 includes a shutdown circuit. The shutdown circuit is configured to control a corresponding photovoltaic module to be disconnected from an inverter. After the corresponding photovoltaic module is disconnected, the power from the photovoltaic module at the input terminal cannot be transmitted to the output terminal.

The first part P1 includes a negative input terminal IN- and a negative output terminal OUT-, and the second part P2 includes a positive input terminal IN+ and a positive output terminal OUT+.

The negative input terminal IN- and the positive input terminal IN+ are respectively connected to a negative electrode and a positive electrode of the photovoltaic module; or the negative input terminal IN- is connected to the negative electrode of the photovoltaic module and the positive input terminal IN+ is connected to a positive electrode of another photovoltaic module; or the negative input terminal IN- is connected to a negative electrode of another photovoltaic module and the positive input terminal IN+ is connected to the positive electrode of the photovoltaic module.

The positive output terminal OUT+ and the negative output terminal OUT- are connected in series with different shutdown apparatuses. Furthermore, it should be understood that in a case that a shutdown apparatus is arranged at an edge of a photovoltaic string, the terminals OUT- or OUT- may serve as output terminals of the photovoltaic string, for example, connected to the input terminal of the inverter.

In an embodiment, for example, the first part P1 includes a male head and a female head, and the second part P2 includes a male head and a female head. The polarities of the male head and the female head respectively corresponding to IN- and OUT- of the first part P1 are opposite, that is, one male head and one female head. The polarities of the male head and the female head respectively corresponding to IN+ and OUT+ of the second part P2 are opposite. In addition, the polarities of the male head and the female head respectively corresponding to IN- and IN+ are opposite, and the polarities of the male head and the female head respectively corresponding to OUT- and OUT+ are opposite.

To intuitively understand the shutdown apparatus according to the embodiments of the present application, descriptions are provided below with a schematic diagram showing a connection relationship between a shutdown apparatus and a photovoltaic module.

Reference is made to FIG. 4, which is a schematic diagram showing an application of a shutdown apparatus according to an embodiment of the present disclosure.

FIG. 4 shows three photovoltaic modules and three shutdown apparatuses. In FIG. 4, the three shutdown apparatuses respectively correspond to a first cable LX11, a second cable LX1, and a third cable LX2.

For each of the shutdown apparatuses, the first part and the second part is connected to each other via a cable.

For each of the shutdown apparatuses, a positive output terminal OUT+ of the shutdown apparatus is connected to a negative output terminal OUT- of a first adjacent shutdown apparatus, and a negative output terminal OUT- of the shutdown apparatus is connected to a positive output terminal OUT+ of a second adjacent shutdown apparatus. Thus, the shutdown apparatus is connected in series with adjacent shutdown apparatuses.

For each of the shutdown apparatuses, a positive input terminal IN+ and a negative input terminal IN- of the shutdown apparatus are respectively connected to a positive electrode PV+ and a negative electrode PV- of a corresponding photovoltaic module.

The shutdown apparatus according to the embodiments of the present disclosure includes two parts, each of the two parts includes an input terminal and an output terminal, the input terminals are connected to the photovoltaic module, and the output terminals are connected in series with output terminals of other shutdown apparatuses. As the two parts are independent, the distance between the two parts may be determined according to requirements. The two parts are arranged at positions convenient for connecting to the photovoltaic module, and the two parts are connected with each other via a cable. In this way, the problem of connecting an output cable of a photovoltaic module with a 3-part junction box to a shutdown apparatus through an extension cable can be avoided, and it is unnecessary to arrange an addition extension cable for the shutdown apparatus. Therefore, the total cable length can be shortened, the installation time can be reduced, the total cable losses can be reduced, and the reliability of the photovoltaic system can be improved.

For the shutdown apparatus according to the embodiments of the present application, the first part and the second part of the shutdown apparatus may both include or both not include a bottom box, or one of the first part and the second part includes a bottom box. An implementation of the shutdown apparatus having a bottom box is described below in conjunction with the drawings. Since the structures of the first part and the second part are symmetrical, the first part is taken as an example in the following drawings.

The positions of the input terminal and the output terminal on the bottom box are not limited in the embodiments of the present disclosure. For example, the two terminals may be respectively arranged on two sides of the bottom box. In addition, the input terminal and the output terminal may be arranged to be or be not perpendicular to each other. The angle between the input terminal and the output terminal is not limited in the embodiments of the present disclosure.

The first part further includes a first bottom box. At least one of the negative input terminal and the negative output terminal is configured with a wire terminal, and the wire terminal is connected to the first bottom box via a cable. For example, one of the negative input terminal and the negative output terminal may be configured with a wire terminal and the other one of the negative input terminal and the negative output terminal may be configured with a board terminal, or each of the negative input terminal and the negative output terminal may be configured with a board terminal.

Alternatively, at least one of the negative input terminal and the negative output terminal is configured with a board terminal, and the board terminal is fixedly connected to the first bottom box. For example, one of the negative input terminal and the negative output terminal may be configured with a wire terminal and the other one of the negative input terminal and the negative output terminal may be configured with a board terminal, or each of the negative input terminal and the negative output terminal may be configured with a board terminal.

For example, the negative input terminal and the negative output terminal may be arranged on different sides of the first bottom box. In addition, the negative input terminal and the negative output terminal may be arranged to be perpendicular to each other, facilitating the connection to photovoltaic modules.

The second part may further include a second bottom box. At least one of the positive input terminal and the positive output terminal is configured with a wire terminal, and the wire terminal is connected to the second bottom box via a cable. For example, one of the positive input terminal and the positive output terminal may be configured with a wire terminal and the other one of the positive input terminal and the positive output terminal may be configured with a board terminal, or each of the positive input terminal and the positive output terminal may be configured with a board terminal.

Alternatively, at least one of the positive input terminal and the positive output terminal may be configured with a board terminal, and the board terminal is connected to the second bottom box via a cable. For example, one of the positive input terminal and the positive output terminal may be configured with a wire terminal and the other one of the positive input terminal and the positive output terminal may be configured with a board terminal, or each of the positive input terminal and the positive output terminal may be configured with a board terminal.

For example, the positive input terminal and the positive output terminal may be arranged on different sides of the second bottom box. In addition, the positive input terminal and the positive output terminal may be arranged to be perpendicular to each other, facilitating the connection to photovoltaic modules.

In addition, both the negative output terminal and the positive output terminal may be horizontal to the direction of the cable connecting the first part and the second part, facilitating the series connection of shutdown apparatuses. The negative input terminal is arranged to be perpendicular to the negative output terminal, and the positive input terminal is arranged to be perpendicular to the positive output terminal, thereby facilitating the connection to photovoltaic modules.

Types of the above four terminals are not limited in the embodiments of the present disclosure. For example, the above four terminals may be wire terminals or board terminals. A wire terminal is a terminal fixed on a cable and is connected to a bottom box via the cable, and the wire terminal is flexibly and fixedly connected to the bottom box. A board terminal is directly fixed on a housing of a bottom box, and is rigidly and fixedly connected to the bottom box.

To avoid misconnection of input terminals and output terminals, input terminals and output terminals of a shutdown apparatus may be configured with different types of terminals. Terminals compatible with the output terminal of the photovoltaic module may be adopted as the input terminals, and terminals not compatible with the output terminal of the photovoltaic module may be adopted as the output terminals.

Reference is made to FIG. 5, which is a schematic diagram of a first part of a shutdown apparatus according to an embodiment of the present disclosure.

The terminal OUT- and the terminal IN-, which is configured as board terminals, are fixed to a bottom box 100, a cable LX connecting to a second part is connected to the bottom box 100. The connection points between the bottom box 100 and the terminal OUT-, the terminal IN-, and the cable LX are required to be sealed for waterproofing.

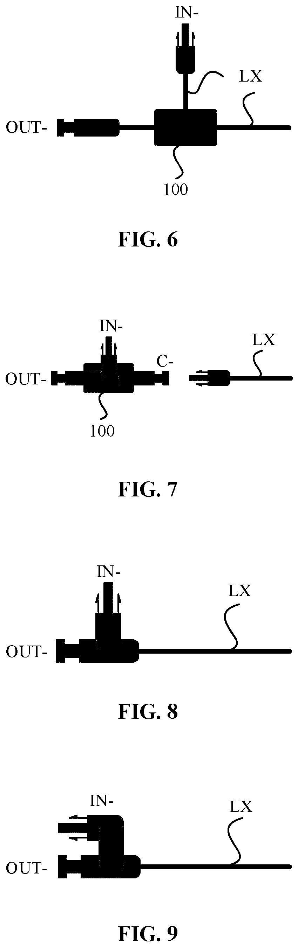

Reference is made to FIG. 6, which is a schematic diagram of a first part of a shutdown apparatus according to another embodiment of the present disclosure.

Both the terminal IN- and the terminal OUT- are configured as wire terminals, and are connected to a bottom box 100 via a cable LX. The advantage of this solution is that the connection to the bottom box 100 is simple, the process is simple, and the terminals IN- and OUT- can be flexibly arranged. In addition, one of the terminal IN- and the terminal OUT-may connect to the bottom box 100 via the cable LX, and the other one of the terminal IN- and the terminal OUT- may be configured as a board terminal and is fixed on the bottom box 100, which is not limited in the embodiments of the present disclosure.

Reference is made to FIG. 7, which is a schematic diagram of a first part of a shutdown apparatus according to another embodiment of the present disclosure.

The bottom box 100 includes three terminals: a terminal IN-, a terminal OUT-, and a terminal C- which is connected to the second part. The cable LX connected to the second part is configured with a terminal having a polarity opposite to the polarity of C-, facilitating the connection to the second part.

The shutdown apparatuses with bottom boxes are described above. Further, the shutdown apparatus may be configured with no bottom box, which is described in detail below in conjunction with the drawings.

Reference is made to FIG. 8, which is a schematic diagram of a shutdown apparatus without a bottom box according to an embodiment of the present disclosure.

The first part of the shutdown apparatus is not arranged with a bottom box, and a three-way wire terminal is adopted. The terminal OUT- and the terminal IN- are arranged to be perpendicular to each other. A waterproof sealing ring is arranged at the connection between the first part and the cable LX. Sealing connection may be performed on the shutdown apparatus when leaving the factory or during on-site installation of the shutdown apparatus.

Reference is made to FIG. 9, which is a schematic diagram of a shutdown apparatus without a bottom box according to another embodiment of the present disclosure.

The first part of the shutdown apparatus is configured with another type of three-way wire terminal, and the terminal OUT- and the terminal IN- are arranged to be horizontal to each other.

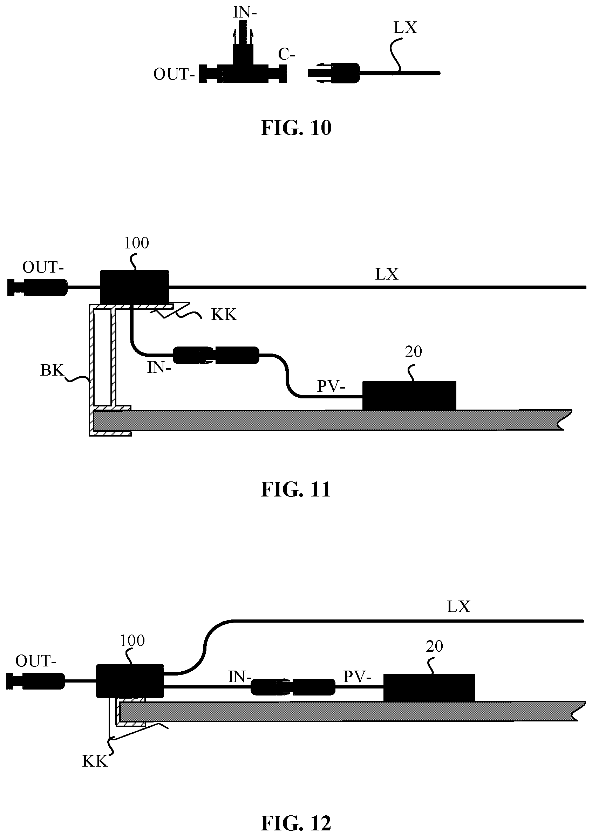

Reference is made to FIG. 10, which is a schematic diagram of a shutdown apparatus without a bottom box according to another embodiment of the present disclosure.

The first part of the shutdown apparatus is configured with a three-way terminal with three terminals of a terminal IN-, a terminal OUT-, and a terminal C- which is connected to the second part. The cable LX connected to the second part is configured with a terminal having a polarity opposite to the polarity of the terminal C-, facilitating the connection to the second part.

The above first part includes a three-way terminal. Similarly, the second part may include a three-way terminal which includes a positive input terminal, a positive output terminal and a second cable terminal. The second cable terminal is connected to the first part, which is not repeated herein.

The cable between the first part and the second part is a photovoltaic specific cable. The length of the cable may be similar to the width of the photovoltaic module or slightly longer than the width of the photovoltaic module, or the cable length may be similar to the length of the photovoltaic module or slightly longer than the length of the photovoltaic module, thereby performing horizontal or vertical installation relative to the photovoltaic module.

The shutdown apparatus according to the present application has small volume and light weight, and the cable can be determined based on sizes of standard modules. Therefore, it is unnecessary to rigidly fix the shutdown apparatus after being installed in the photovoltaic system. Apparently, the shutdown apparatus may be tied by using zip ties at a frame hole or a bracket of the photovoltaic module.

An example in which a fastening structure is arranged on the shutdown apparatus to fasten the shutdown apparatus to the photovoltaic module is described below.

Reference is made to FIG. 11, which is a schematic diagram of installing a shutdown apparatus on a photovoltaic module according to an embodiment of the present disclosure.

For the shutdown apparatus according to the embodiment, the bottom box 100 is arranged with a fastening structure which is a buckle KK as an example. The fastening structure is configured to fasten the bottom box to a corresponding photovoltaic module.

The shutdown apparatus may be fastened to the photovoltaic module or to the bracket of the photovoltaic module. A photovoltaic module having an aluminum frame BK is taken as an example.

It should be understood that the terminal IN- of the shutdown apparatus is connected to PV- of a first photovoltaic module, and the PV- is led out from a junction box 20 of the first photovoltaic module. The bottom box 100 of the shutdown apparatus may be fixed only to the frame BK of the first photovoltaic module through the buckle KK.

It can be seen that the buckle KK is arranged on a side of the bottom box 100, and the buckle KK is fixed to the frame BK of the photovoltaic module, thereby fixing the relative position of the shutdown apparatus and the photovoltaic module.

As shown in FIG. 11, the photovoltaic module is arranged with a frame. Below, an implementation of a photovoltaic module without frames is described in conjunction with the drawings.

Reference is made to FIG. 12, which is a schematic diagram of installing a shutdown apparatus to a photovoltaic module according to another embodiment of the present disclosure.

Compared to FIG. 11, in FIG. 12, the photovoltaic module is arranged without an aluminum frame, and the buckle KK is directly fixed on the first photovoltaic module. For example, the connection point of the buckle KK may be arranged on a front glass of the first photovoltaic module.

The shutdown apparatus may be fixed on the photovoltaic module on-site at a photovoltaic power station, or the shutdown apparatus may be directly pre-installed on the photovoltaic module at the factory as a photovoltaic module having a shutdown function.

The type of the shutdown circuit in the shutdown apparatus is not limited in the embodiments of the present disclosure. For example, the shutdown apparatus may include an optimizer or a shutdown device. Descriptions are provided below in conjunction with the drawings.

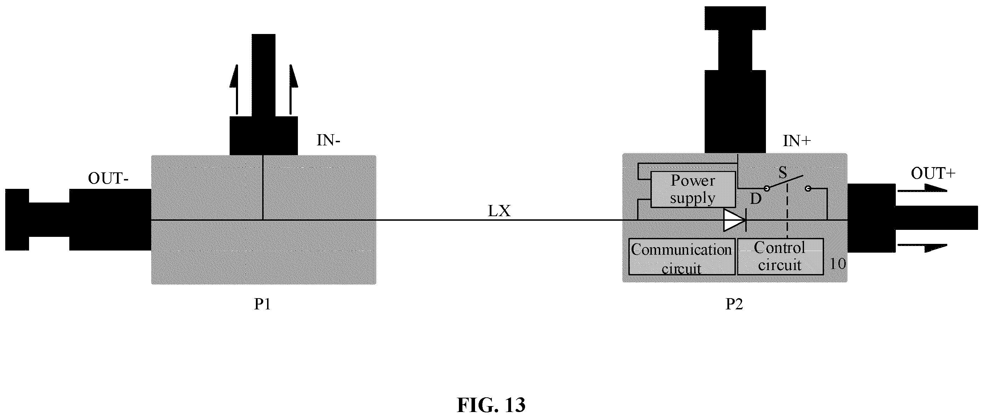

Reference is made to FIG. 13, which is a schematic diagram of a shutdown apparatus according to an embodiment of the present disclosure.

The shutdown circuit in the shutdown apparatus according to the embodiment includes a shutdown device. Descriptions are provided below by taking the second part P2 of the shutdown apparatus including a shutdown device as an example.

The terminal IN- and the terminal OUT- of the first part P1 are electrically connected to each other internally, and the cable LX is equipotential with the terminal IN-. The second part P2 includes a power supply, a control circuit 10, a diode D, and a switch S. The power supply takes power from the terminal IN+ and an input terminal of the cable LX, which is equivalent to taking power from the photovoltaic module connected to the terminal IN+ and the terminal IN-. The power supply supplies power to the internal control circuit 10.

The shutdown device includes: a control circuit 10, a diode D, and a switch S.

A first terminal of the switch S is connected to the positive input terminal IN+, and a second terminal of the switch S is connected to the positive output terminal OUT+.

An anode of the diode D is connected to the negative output terminal OUT- via the cable LX, and a cathode of the diode D is connected to the second terminal of the switch S.

The control circuit 10 is configured to control the switch S to be turned on or turned off.

It should be understood that in a case of turning on the switch S, the photovoltaic module is connected to the inverter, and power is transmitted to the input terminal of the inverter; and in a case of turning off the switch S, the photovoltaic module is disconnected from the inverter, and power cannot be transmitted to the inverter.

The switch S may be a mechanical switch such as a relay, or the switch S may be a semiconductor switch such as a MOSFET. The diode D is connected between the cable LX and the terminal OUT+. In a case of turning off the switch S, the diode D provides a bypass current path for the photovoltaic strings. The diode D may be implemented using a transistor such as a MOSFET, and performs synchronous rectification while being conducted to reduce bypass losses. The control circuit controls the switch S to be turned on or turned off. The shutdown apparatus may further include a communication circuit, such as a power-line carrier communication circuit or a wireless communication circuit. The communication circuit may be arranged in the first part P1 to receive external instructions such as for turning off or turning on the photovoltaic module.

FIG. 13 shows an example in which the second part includes a shutdown circuit. Descriptions are provided below by taking the first part including a shutdown circuit as an example.

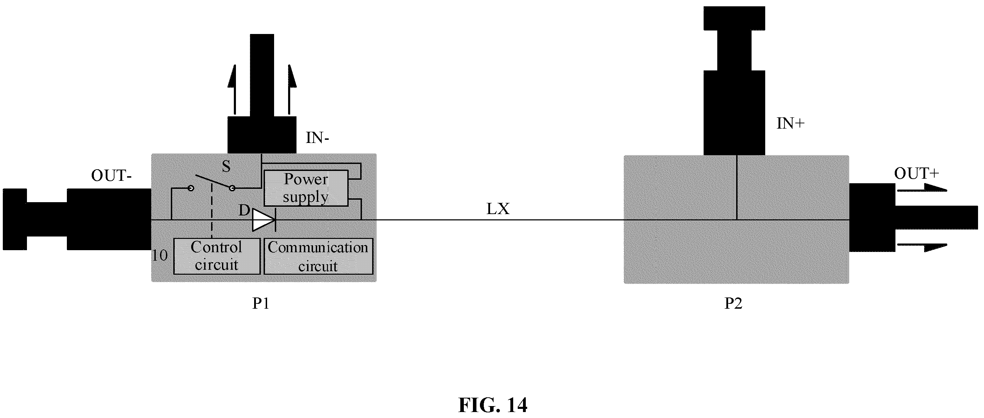

Reference is made to FIG. 14, which is a schematic diagram of a shutdown apparatus according to another embodiment of the present disclosure.

The first part includes a shutdown circuit. The shutdown circuit includes a shutdown device.

The shutdown device includes: a control circuit 10, a diode D, and a switch S.

A first terminal of the switch S is connected to the negative input terminal IN-, and a second terminal of the switch S is connected to the negative output terminal OUT-.

A cathode of the diode D is connected to the positive output terminal OUT+ via a cable, and an anode of the diode D is connected to the second terminal of the switch S.

The control circuit 10 is configured to control the switch S to be turned on or turned off.

The operation principle of the shutdown circuit is similar to the operation principle shown in FIG. 13, and is not repeated herein.

Further, the shutdown circuit according to the embodiments of the present disclosure may be an optimizer. The optimizer includes a buck-boost circuit, a boost circuit, or a buck circuit.

Descriptions are provided below by taking the optimizer including a buck circuit as an example.

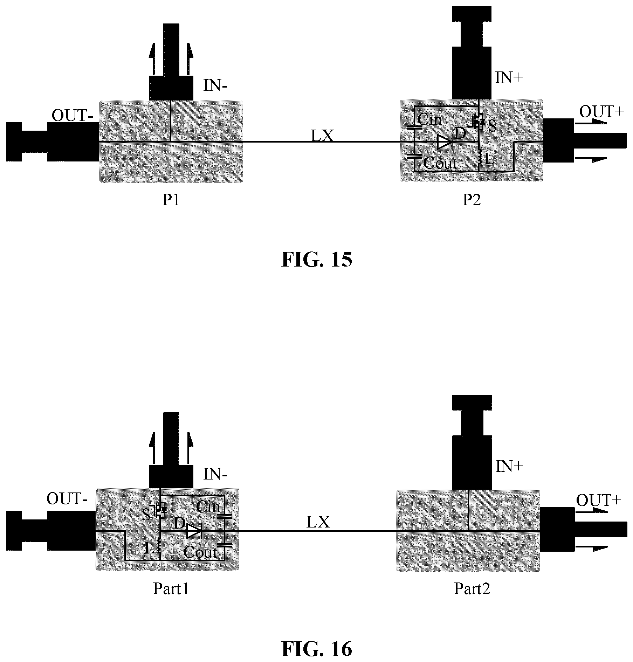

Reference is made to FIG. 15, which is a schematic diagram of a shutdown apparatus according to another embodiment of the present disclosure.

The optimizer includes a buck circuit. The buck circuit includes: a control circuit (not shown in FIG. 15), a diode D, a switch S, and an inductor L.

The buck circuit further includes an input capacitor Cin and an output capacitor Cout. Two terminals of the input capacitor Cin are respectively connected to the cable LX and the terminal IN+, and two terminals of the output capacitor C out are respectively connected to the cable LX and the terminal OUT+.

The buck circuit includes the control circuit, the diode D, the switch S and the inductor L.

A first terminal of the switch S is connected to the positive input terminal IN+, and a second terminal of the switch S is connected to the positive output terminal OUT+ via the inductor L.

An anode of the diode D is connected to the negative output terminal OUT-, and a cathode of the diode D is connected to the positive output terminal OUT+ via the inductance L.

The control circuit is configured to control the switch S to be turned on or turned off.

Further, the Buck circuit may track a maximum power point of the photovoltaic module. Current sampling may be performed on the inductance L by using a current sensor connected in series with the inductance L.

FIG. 15 shows an example in which the second part includes a shutdown circuit. Descriptions are provided below by taking the first part including a shutdown circuit.

FIG. 16 is a schematic diagram of a shutdown apparatus according to another embodiment of the present disclosure.

The optimizer includes a buck circuit. The buck circuit includes: a control circuit (not shown in FIG. 16), a diode D, a switch S, and an inductor L. A first terminal of the switch S is connected to the negative input terminal IN-, and a second terminal of the switch S is connected to the negative output terminal OUT- via the inductor L. A cathode of the diode is connected to the positive output terminal OUT+ via a cable, and an anode of the diode is connected to the negative output terminal OUT- via the inductor L. The control circuit is configured to control the switch S to be turned on or turned off.

The operation principle of the shutdown circuit is similar to the operation principle illustrated in FIG. 15, and is not repeated herein. Based on the shutdown apparatus according to the above embodiments, a photovoltaic system is further provided according to an embodiment of the present disclosure. The photovoltaic system is described in detail below in conjunction with the drawings.

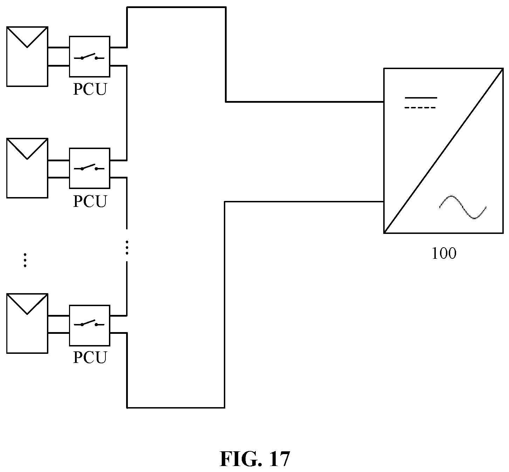

Reference is made to FIG. 17, which is a schematic diagram of a photovoltaic system according to the present disclosure.

The photovoltaic system according to the embodiment includes the shutdown apparatuses PCUs described above, and further includes an inverter 100.

For each of the shutdown apparatuses, two input terminals of the shutdown apparatus may be connected to the same photovoltaic modules or may be connected to different photovoltaic modules, and two output terminals of the shutdown apparatus are connected in series with two adjacent shutdown apparatuses.

Multiple shutdown apparatuses PCUs are connected in series and then connected to an input terminal of the inverter 100.

It should be understood that the input terminal of the inverter 100 may be connected to the multiple photovoltaic strings, and FIG. 17 only shows one photovoltaic string as an example.

The photovoltaic system according to the embodiments includes the shutdown apparatus described above, the total cable length can be reduced, the power consumption of the entire system can be reduced, and the power generation efficiency of the photovoltaic system can be improved. Furthermore, the installation time can be shortened, the extension cable is unnecessary, the number of the connection terminals can be reduced, thereby facilitating maintenance and improving the reliability of the photovoltaic system.

The shutdown apparatus according to the embodiments of the present disclosure includes two parts, so that operations are flexible. The shutdown apparatus, before or after leaving factory, may be pre-arranged on a photovoltaic module, that is, the shutdown apparatus is pre-installed on the photovoltaic module. Then, the photovoltaic modules arranged with the shutdown apparatuses are connected in series to form a photovoltaic string.

It should be noted that the embodiments in the present disclosure are described in a progressive manner, and each of the embodiments focuses on its differences from the other embodiments. The same and similar parts among the embodiments may be referred to each other. The system or apparatus disclosed in the embodiments correspond to the method disclosed in the embodiments, and therefore are described in a relatively simple way. Reference may be made to the description of the method for relevant details.

The disclosed embodiments are described above, so that those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A shutdown apparatus for a photovoltaic module, comprising: a first part and a second part, wherein
the first part or the second part comprises a shutdown circuit, and the first part is connected to the second part via a cable;
the first part comprises a negative input terminal and a negative output terminal, and the second part comprises a positive input terminal and a positive output terminal;
the negative input terminal is configured to be connected to a negative electrode of the photovoltaic module and the positive input terminal is configured to be connected to a positive electrode of the photovoltaic module, or the negative input terminal is configured to be connected to the negative electrode of the photovoltaic module and the positive input terminal is configured to be connected to a positive electrode of another photovoltaic module, or the negative input terminal is configured to be connected to a negative electrode of another photovoltaic module and the positive input terminal is configured to be connected to the positive electrode of the photovoltaic module; and
the positive output terminal and the negative output terminal are configured to be connected in series with different shutdown apparatuses.

2. The shutdown apparatus according to claim 1, wherein the first part further comprises a first bottom box;
at least one of the negative input terminal and the negative output terminal is configured with a wire terminal, and the wire terminal is connected to the first bottom box via a cable; or
at least one of the negative input terminal and the negative output terminal is configured with a board terminal, and the board terminal is fixedly connected to the first bottom box.

3. The shutdown apparatus according to claim 2, wherein the negative input terminal and the negative output terminal are arranged on different sides of the first bottom box.

4. The shutdown apparatus according to claim 1, wherein the first part comprises a three-way terminal, the three-way terminal comprises the negative input terminal, the negative output terminal and a first cable terminal, and the first cable terminal is connected to the second part.

5. The shutdown apparatus according to any one of claims 1 to 4, wherein the second part further comprises a second bottom box;
at least one of the positive input terminal and the positive output terminal is configured with a wire terminal, and the wire terminal is connected to the second bottom box via a cable; or
at least one of the positive input terminal and the positive output terminal is configured with a board terminal, and the board terminal is connected to the second bottom box via a cable.

6. The shutdown apparatus according to claim 5, wherein the positive input terminal and the positive output terminal are arranged on different sides of the second bottom box.

7. The shutdown apparatus according to claim 1, wherein the second part comprises a three-way terminal, the three-way terminal comprises the positive input terminal, the positive output terminal and a second cable terminal, and the second cable terminal is connected to the first part.

8. The shutdown apparatus according to claim 2 or 3, wherein the first bottom box is arranged with a first fastening structure, and the first fastening structure is configured to fasten the first bottom box to the photovoltaic module.

9. The shutdown apparatus according to claim 5 or 6, wherein the second bottom box is arranged with a second fastening structure, and the second fastening structure is configured to fasten the second bottom box to the photovoltaic module.

10. The shutdown apparatus according to any one of claims 1 to 9, wherein
the second part comprises the shutdown circuit, and the shutdown circuit comprises a shutdown device;
the shutdown device comprises: a control circuit, a diode, and a switch;
a first terminal of the switch is connected to the positive input terminal, and a second terminal of the switch is connected to the positive output terminal;
an anode of the diode is connected to the negative output terminal via a cable, and a cathode of the diode is connected to the second terminal of the switch; and
the control circuit is configured to control the switch to be turned on or turned off.

11. The shutdown apparatus according to any one of claims 1 to 9, wherein
the first part comprises the shutdown circuit, and the shutdown circuit comprises a shutdown device;
the shutdown device comprises: a control circuit, a diode, and a switch;
a first terminal of the switch is connected to the negative input terminal, and a second terminal of the switch is connected to the negative output terminal;
a cathode of the diode is connected to the positive output terminal via a cable, and an anode of the diode is connected to the second terminal of the switch; and
the control circuit is configured to control the switch to be turned on or turned off.

12. The shutdown apparatus according to any one of claims 1 to 9, wherein the shutdown circuit comprises an optimizer, and the optimizer comprises a buck-boost circuit, a boost circuit, or a buck circuit.

13. The shutdown apparatus according to claim 12, wherein
the second part comprises the optimizer, and the optimizer comprises the buck circuit;
the buck circuit comprises: a control circuit, a diode, a switch, and an inductor;
a first terminal of the switch is connected to the positive input terminal, and a second terminal of the switch is connected to the positive output terminal via the inductor;
an anode of the diode is connected to the negative output terminal via a cable, and a cathode of the diode is connected to the positive output terminal via the inductor; and
the control circuit is configured to control the switch to be turned on or turned off.

14. The shutdown apparatus according to claim 12, wherein
the optimizer comprises the buck circuit;
the buck circuit comprises: a control circuit, a diode, a switch, and an inductor;
a first terminal of the switch is connected to the negative input terminal, and a second terminal of the switch is connected to the negative output terminal via the inductor;
a cathode of the diode is connected to the positive output terminal via a cable, and an anode of the diode is connected to the negative output terminal via the inductor; and
the control circuit is configured to control the switch to be turned on or turned off.

15. A photovoltaic system, comprising a plurality of shutdown apparatuses according to any one of claims 1 to 14, and further comprising an inverter, wherein
for each of the plurality of shutdown apparatuses,
the first part and the second part of the shutdown apparatus are connected to each other via a cable;
the positive output terminal of the shutdown apparatus is connected to a negative output terminal of a first adjacent shutdown apparatus, and the negative output terminal of the shutdown apparatus is connected to a positive output terminal of a second adjacent shutdown apparatus;
the positive input terminal of the shutdown apparatus is configured to be connected to a positive electrode of a photovoltaic module and the negative input terminal of the shutdown apparatus is configured to be connected to a negative electrode of the photovoltaic module, or the positive input terminal of the shutdown apparatus is configured to be connected to a positive electrode of a photovoltaic module and the negative input terminal of the shutdown apparatus is configured to be connected to a negative electrode of another photovoltaic module; and
the plurality of shutdown apparatuses are connected in series and then connected to an input terminal of the inverter.

16. The photovoltaic system according to claim 15, wherein each of the plurality of shutdown apparatuses is pre-arranged on a corresponding photovoltaic module.
